# EUROPEAN PATENT SPECIFICATION

(11) **EP 2 527 895 B1**
(45) Date of publication and mention of the grant of the patent: **04.12.2013**
(21) Application number: 11167711.8
(22) Date of filing: 26.05.2011
(51) Int. Cl.: G02B 6/44

(54) **Fiber optic distribution device**
Glasfaserverteilungsvorrichtung
Dispositif de distribution à fibre optique

(43) Date of publication of application: 28.11.2012
(73) Proprietor: CCS Technology, Inc., Wilmington, DE 19803 (US)
(72) Inventor: Knuth, Thomas, Dr., 10317 Berlin (DE)
(74) Representative: Sturm, Christoph

(56) References cited:
- EP-A2- 2 141 527
- US-A- 5 781 678
- US-A1- 2003 194 187

## Description

The patent application relates to a fiber optic distribution device for indoor applications, especially to a floor box. Further on, the patent application relates to an assembly comprising such a fiber optic distribution device and fiber optic cables.

In the world of the ever-increasing need for broadband bandwidth optical cables have become the main part of telecommunication networks. Optical cables can transmit voice signals, data signals and video signals for very long distances with very high speed. Developments of optical telecommunication networks allow the connection of the end user directly to the optical fiber. This kind of network technology known as FTTH technology (fiber to the home) requires extending an "all optical" communication network closer to the subscribers. As a result such telecommunication networks include large number distribution points from a distribution cable to an end user or subscriber.

One of the key parts of the FTTH network is the last mile connection which often is an indoor installation. Different kind of buildings like multi dwelling units and block of flats require complicated cabling systems which might mean that there are many separated cables, each one to connect one subscriber. Installation of many cables which provide the connection between a main distribution point, which usually is located in the basement or in another place of the building, and the end user may cause many problems with routing through the wall or levels of the building. As a result, such installations consume a lot of time and costs.

Another way to provide the connection between the main distribution point and the end user or subscriber is by using an optical cable comprising a riser cable with branched off tether cables, whereby the riser cable is to be connected to the main distribution point via a distribution cable, and whereby the tether cables are to be connected to subscribers via a drop cables. The installation of an optical cable comprising a riser cable and branched off tether cables to provide connection between the main distribution point and the subscribers is done by a highly skilled field technician using standard fiber optic distribution devices which results in high costs of installation.

In each case it is necessary to handle connections and/or splices between optical fibers of a first fiber optic cable, e.g. of a riser cable or alternatively a tether cable, having a plurality of optical fibers and optical fibers of a plurality of second fiber optic cables, e.g. to tether cables or alternatively drop cables, each having at least one optical fiber branched off the or each first fiber optic cable.

Such connections and/or splices are handled in so called fiber optic distribution devices like floor boxes or wall boxes. Such fiber optic distribution device known from the prior art comprise housings being rigid and bulky. The use of those very often bulky housings in e.g. stairway areas of a building is sometimes problematic for example due to space requirements or considerations of fire protection, especially when those boxes are mounted visibly on the wall in staircases.

Against this background, a novel fiber optic distribution device for indoor applications is provided. The novel fiber optic distribution device is defined by claim 1. According to claim 1, the fiber optic distribution device comprises a housing, wherein said housing comprises a flexible housing part, said flexible housing part being transferable between an open status of the flexible housing part in which the same takes a flat shape and a closed status of the flexible housing part in which the same takes a bent shape being partially wound around the or each first fiber optic cable.

This invention allows cable termination points to reside inside existing duct architectures while still allowing the termination of cables in a standard way and maintaining flexibility of cable routing. The invention allows the termination of fibre optic cables in restricted spaces, avoiding floor termination boxes in public spaces. This helps to decrease fire load in each e.g. multi dwelling units. The advantage is that no stiff housing is used but a rather flexible housing, allowing the cable installation in given duct systems. This avoids problems during installation and therefore speeds up deployment of FTTH as well as lowers the fire load in publically used areas.

The assembly comprising such a fiber optic distribution device and fiber optic cables is defined in claim 11.

Preferred embodiments of the fiber optic distribution device and fiber optic network are given in the dependent claims and the description below. Exemplary embodiments will be explained in more detail with reference to the drawing, in which:
- Figure 1: shows a schematic view of a fiber optic distribution device in an open status of the same; and
- Figure 2 and 3: each show schematic views of a fiber optic distribution device in a closed status of the same.

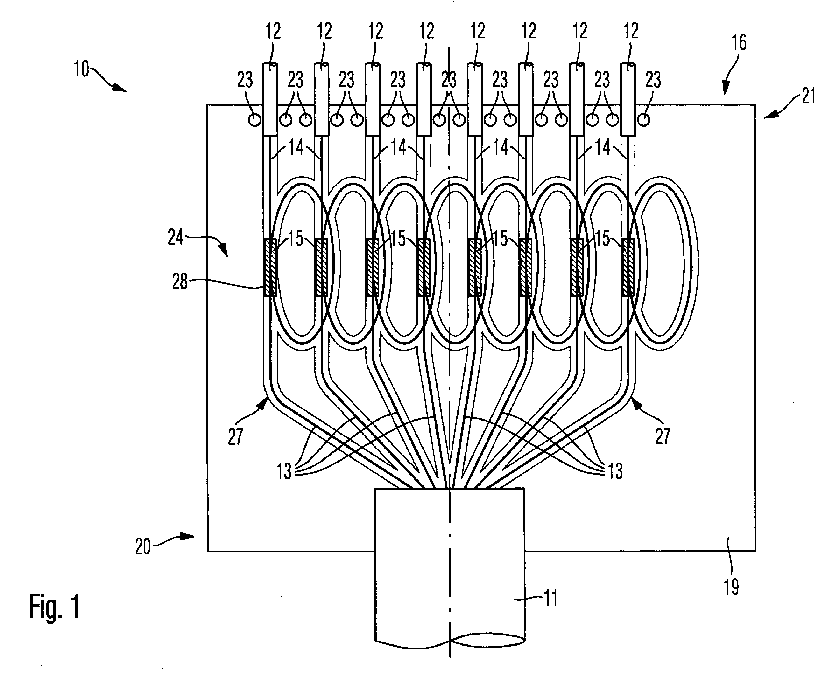

Figures 1, 2 and 3 show a preferred embodiment of a fiber optic distribution device 10 for indoor applications in combination with a single first fiber optic cable 11 and a plurality of second fiber optic cables 12.

The shown first fiber optic cable 11 can be a riser cable or alternatively a tether cable having a plurality of optical fibers 13. The shown second fiber optic cables 12 can be tether cables or alternatively drop cables each having at least one, in the shown embodiment a single one, optical fiber 14 branched off the or each first fiber optic cable 11.

The optical fibers 14 of the second fiber optic cables 12 are connected with the optical fibers 13 of the first fiber optic cable 11 by splices or connectors. The embodiment shows splices 15 between the same.

The connection points or splices 15 between the optical fibers 13, 14 are handled in said fiber optic distribution device 10.

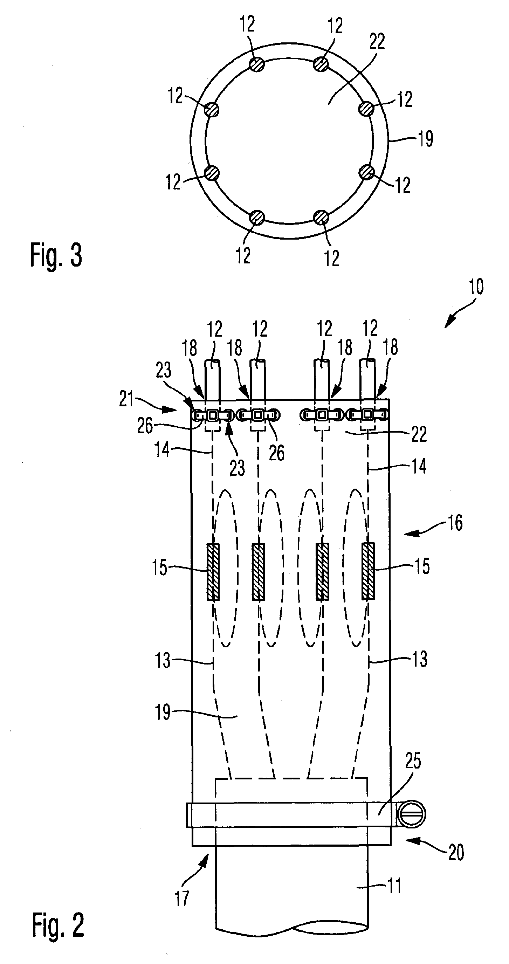

The fiber optic distribution device 10 comprises a housing 16. Said housing 16 provides an inlet opening 17 for said first fiber optic cable 11 and a plurality of outlet openings 18 for said plurality of second fiber optic cables 12. The housing 16 comprises a flexible housing part 19. Said flexible housing part 19 is transferable between an open status (see Figure 1) in which the same takes a flat shape and a closed status (see Figures 2 and 3) in which the same takes a bent shape being partially wound around the first fiber optic cable 11.

In the closed status - Figure 2 shows a side view and Figure 3 a top view of the closed status - of the flexible housing part 19 a first end 20 of said flexible housing part 19 providing said inlet opening 17 is wound around said first fiber optic cable 11 and fixed at said first fiber optic cable 11 by a fixing element 25. Said fixing element 25 is preferably a cable tie or a cable clamp.

In the closed status (see Figures 2 and 3) of the flexible housing part 19 a second end 21 of said flexible housing part 19 is closed by plug element 22 (see Figure 2) providing said plurality of outlet openings 18 for said plurality of second fiber optic cables 12.

Said second end 21 of said flexible housing part 19 provides strain relief elements for said second fiber optic cables 12. Said second end 21 of said flexible housing part 19 comprises openings 23 for cable ties 26 so that each of said second fiber optic cables 12 is individually strain reliefable by a cable tie 26 being thread through two respective openings 23 and surrounding the respective second fiber optic cable 12 and the respective segment of said second end 21 of said flexible housing part 19.

A wall 24 of said flexible housing part 19 which in the closed status of the same corresponds to an inner wall of the flexible housing part 19 provides fiber routing elements 27 for optical fibers 13, 14 and holding elements 28 for the splices 15 and/or for connectors by which the optical fibers 13, 14 are spliced and/or connected to each other.

Said housing 16, namely at least the flexible housing part 19, is made from a flexible plastic material like a flexible thermoplastic material. It is also possible that the plug element 22 is made from such a flexible plastic material like a flexible thermoplastic material.

The flexible housing part 19 holds splices 15 and fibre routing elements in the inside. For installation the flexible housing part 19 is put in a flat shape (see Figure 1) to allow the installation of the splices 15 into the respective holding elements as well as the fibre routing inside the respective fiber routing elements.

The first fibre optic cable 11 is strain relieved on the lower end 20 of the flexible housing part 19 as well as the second fiber optic cables 12 are strain relieved on the upper end 21 of the flexible housing part 19.

Once the fiber optic cables 11, 12 are secured, the fibers 13, 14 of the same are spliced and stored at the flexible housing part 19, the flexible housing part 19 is rolled together and fixed in this position to be aligned with and conform to the shape of the first fiber optic cable 11. This creates a somewhat thicker cable shape and due to the flexible material of the housing part 19 the same can be bent in various directions to follow existing duct structures.

Due to the thin shape and flexible material of the housing part 19 the fiber optic distribution device 10 can be stored inside cable ducts without being in danger of compromising the minimum bend diameter of the optical fibers 13, 14.

### List of reference numerals

- 10: fiber optic distribution device
- 11: first fiber optic cable
- 12: second fiber optic cable
- 13: optical fiber
- 14: optical fiber
- 15: splice
- 16: housing
- 17: inlet opening
- 18: outlet opening
- 19: flexible housing part
- 20: first end
- 21: second end
- 22: plug
- 23: opening
- 24: wall
- 25: fixing element
- 26: cable tie
- 27: routing element
- 28: holding element

## Claims

1. A fiber optic distribution device (10) for indoor applications, comprising a housing (16), said housing (16) providing at least one inlet opening (17) for at least one first fiber optic cable (11) having a plurality of optical fibers (13) and a plurality of outlet openings (18) for a plurality of second fiber optic cables (12) each having at least one optical fiber (14) branched off the or each first fiber optic cable (11), **characterized in that** said housing (16) comprises a flexible housing part (19), said flexible housing part (19) being transferable between an open status of the flexible housing part (19) in which the same takes a flat shape and a closed status of the flexible housing part (19) in which the same takes a bent shape being partially wound around the or each first fiber optic cable.

2. The fiber optic distribution device as claimed in claim 1, **characterised in that** a first end (20) of said flexible housing part (19) is in the closed status of the same wound around a first fiber optic cable (11) and fixed at said first fiber optic cable (11) by a fixing element (25).

3. The fiber optic distribution device as claimed in claim 2, **characterised in that** said fixing element (25) is a cable tie or a cable clamp.

4. The fiber optic distribution device as claimed in claim 2 or 3, **characterised in that** a second end (21) of said flexible housing part (19) is in the closed status of the same wound closed by plug element (22) providing said plurality of outlet openings (18) for said plurality of second fiber optic cables (12).

5. The fiber optic distribution device as claimed in claim 4, **characterised in that** said second end (21) of said flexible housing part (19) provides strain relief elements for said second fiber optic cables (12).

6. The fiber optic distribution device as claimed in claim 5, **characterised in that** said second end (21) of said flexible housing part (19) comprises openings (23) for cable ties (26) so that each of said second fiber optic cables (12) is individually strain reliefable by a cable ties (26) surrounding the respective second fiber optic cable (12) and the respective segment of said second end (21) of said flexible housing part (19).

7. The fiber optic distribution device as claimed in one of claims 1 to 6, **characterised in that** a wall (24) of said flexible housing part (19) which in the closed status of the same corresponds to an inner wall of the same provides fiber routing elements (27) for optical fibers (13) of the or each first fiber optic cable (11) and fiber routing elements (27) for optical fibers (14) of the second fiber optic cables (12).

8. The fiber optic distribution device as claimed in one of claims 1 to 7, **characterised in that** a wall (24) of said flexible housing part (19) which in the closed status of the same corresponds to an inner wall of the same provides holding elements (28) for splices and/or connectors by which optical fibers (13) of the or each first fiber optic cable (11) and optical fibers (14) of the second fiber optic cables (12) are spliced and/or connected to each other.

9. The fiber optic distribution device as claimed in one of claims 1 to 8, **characterised in that** said housing (16) is made from a flexible plastic material like a flexible thermoplastic material.

10. The fiber optic distribution device as claimed in claim 9, **characterised in that** said flexible housing part (19) and said plug element (22) are both made from said flexible plastic material.

11. Assembly comprising a fiber optic distribution device (10) as claimed in one of claims 1 to 10, at least one first fiber optic cable (11) and a plurality of second fiber optic cables (12).

## Patentansprüche

1. Glasfaserverteilungsvorrichtung (10) für Innenanwendungen mit einem Gehäuse (16), wobei das Gehäuse (16) mindestens eine Einlassöffnung (17) für mindestens ein erstes Glasfaserkabel (11) mit mehreren Glasfasern (13) und mehrere Auslassöffnungen (18) für mehrere zweite Glasfaserkabel (12) bereitstellt, die jeweils mindestens eine Glasfaser (14) aufweisen, die vom ersten oder von jedem ersten Glasfaserkabel (11) abzweigt, **dadurch gekennzeichnet, dass** das Gehäuse (16) einen flexiblen Gehäuseteil (19) aufweist, wobei der flexible Gehäuseteil (19) zwischen einem offenen Zustand des flexiblen Gehäuseteils (19), in dem derselbe eine flache Form annimmt, und einem geschlossenen Zustand des flexiblen Gehäuseteils (19), in dem derselbe eine gebogene Form, die teilweise um das oder jedes erste Glasfaserkabel gewickelt ist, annimmt, überführbar ist.

2. Glasfaserverteilungsvorrichtung nach Anspruch 1, **dadurch gekennzeichnet, dass** ein erstes Ende (20) des flexiblen Gehäuseteils (19) im geschlossenen Zustand desselben um ein erstes Glasfaserkabel (11) gewickelt ist und durch ein Befestigungselement (25) am ersten Glasfaserkabel (11) befestigt ist.

3. Glasfaserverteilungsvorrichtung nach Anspruch 2, **dadurch gekennzeichnet, dass** das Befestigungselement (25) ein Kabelbinder oder eine Kabelklemme ist.

4. Glasfaserverteilungsvorrichtung nach Anspruch 2 oder 3, **dadurch gekennzeichnet, dass** ein zweites Ende (21) des flexiblen Gehäuseteils (19) im geschlossenen Zustand desselben durch ein Stopfenelement (22) geschlossen ist, wodurch die mehreren Auslassöffnungen (18) für die mehreren zweiten Glasfaserkabel (12) bereitgestellt sind.

5. Glasfaserverteilungsvorrichtung nach Anspruch 4, **dadurch gekennzeichnet, dass** das zweite Ende (21) des flexiblen Gehäuseteils (19) Zugentlastungselemente für die zweiten Glasfaserkabel (12) bereitstellt.

6. Glasfaserverteilungsvorrichtung nach Anspruch 5, **dadurch gekennzeichnet, dass** das zweite Ende (21) des flexiblen Gehäuseteils (19) Öffnungen (23) für Kabelbinder (26) aufweist, so dass jedes der zweiten Glasfaserkabel (12) einzeln durch einen Kabelbinder (26) zugentlastet werden kann, der das jeweilige zweite Glasfaserkabel (12) und das jeweilige Segment des zweiten Endes (21) des flexiblen Gehäuseteils (19) umgibt.

7. Glasfaserverteilungsvorrichtung nach einem der Ansprüche 1 bis 6, **dadurch gekennzeichnet, dass** eine Wand (24) des flexiblen Gehäuseteils (19), die im geschlossenen Zustand desselben einer Innenwand desselben entspricht, Faserleitelemente (27) für Glasfasern (13) des oder jedes ersten Glasfaserkabels (11) und Faserleitelemente (27) für Glasfasern (14) der zweiten Glasfaserkabel (12) bereitstellt.

8. Glasfaserverteilungsvorrichtung nach einem der Ansprüche 1 bis 7, **dadurch gekennzeichnet, dass** eine Wand (24) des flexiblen Gehäuseteils (19), die im geschlossenen Zustand desselben einer Innenwand desselben entspricht, Halteelemente (28) für Verbindungselemente und/oder Verbinder bereitstellt, durch die Glasfasern (13) des oder jedes ersten Glasfaserkabels (11) und Glasfasern (14) der zweiten Glasfaserkabel (12) miteinander verbunden und/oder zusammengefügt werden.

9. Glasfaserverteilungsvorrichtung nach einem der Ansprüche 1 bis 8, **dadurch gekennzeichnet, dass** das Gehäuse (16) aus einem flexiblen Kunststoffmaterial in der Art eines flexiblen thermoplastischen Materials besteht.

10. Glasfaserverteilungsvorrichtung nach Anspruch 9, **dadurch gekennzeichnet, dass** der flexible Gehäuseteil (19) und das Stopfenelement (22) beide aus dem flexiblen Kunststoffmaterial bestehen.

11. Anordnung mit einer Glasfaserverteilungsvorrichtung (10) nach einem der Ansprüche 1 bis 10, mindestens einem ersten Glasfaserkabel (11) und mehreren zweiten Glasfaserkabeln (12).

## Revendications

1. Dispositif (10) de distribution de fibres optiques pour applications en intérieur, comportant un boîtier (16), ledit boîtier (16) ménageant au moins une ouverture (17) d'entrée pour au moins un premier câble (11) à fibres optiques doté d'une pluralité de fibres optiques (13) et une pluralité d'ouvertures (18) de sortie pour une pluralité de deuxièmes câbles (12) à fibres optiques dont chacun est doté d'au moins un fibre optique (14) ramifié à partir du ou de chaque premier câble (11) à fibres optiques, **caractérisé en ce que** ledit boîtier (16) comporte une partie souple (19) de boîtier, ladite partie souple (19) de boîtier pouvant être transférée entre un état ouvert de la partie souple (19) de boîtier dans lequel celle-ci adopte une forme plate et un état fermé de la partie souple (19) de boîtier dans lequel celle-ci adopte une forme coudée qui est partiellement enroulée autour du ou de chaque premier câble à fibres optiques.

2. Dispositif de distribution de fibres optiques selon la revendication 1, **caractérisé en ce qu'**une première extrémité (20) de ladite partie souple (19) de boîtier est, dans l'état fermé de celle-ci, enroulée autour d'un premier câble (11) à fibres optiques et fixée audit premier câble (11) à fibres optiques par un élément (25) de fixation.

3. Dispositif de distribution de fibres optiques selon la revendication 2, **caractérisé en ce que** ledit élément (25) de fixation est une attache de câble ou un serre-câble.

4. Dispositif de distribution de fibres optiques selon la revendication 2 ou 3, **caractérisé en ce qu'**une deuxième extrémité (21) de ladite partie souple (19) de boîtier est, dans l'état fermé de celle-ci, fermée par un élément (22) de bouchon ménageant ladite pluralité d'ouvertures (18) de sortie pour ladite pluralité de deuxièmes câbles (12) à fibres optiques.

5. Dispositif de distribution de fibres optiques selon la revendication 4, **caractérisé en ce que** ladite deuxième extrémité (21) de ladite partie souple (19) de boîtier incorpore des éléments atténuateurs de traction pour lesdits deuxièmes câbles (12) à fibres optiques.

6. Dispositif de distribution de fibres optiques selon la revendication 5, **caractérisé en ce que** ladite deuxième extrémité (21) de ladite partie souple (19) de boîtier comporte des ouvertures (23) pour attaches (26) de câble de telle façon que chacun desdits deuxièmes câbles (12) à fibres optiques puisse individuellement faire l'objet d'une atténuation de traction par des attaches (26) de câble entourant le deuxième câble (12) à fibres optiques correspondant et le segment correspondant de ladite deuxième extrémité (21) de ladite partie souple (19) de boîtier.

7. Dispositif de distribution de fibres optiques selon l'une des revendications 1 à 6, **caractérisé en ce qu'**une paroi (24) de ladite partie souple (19) de boîtier qui, dans l'état fermé de celle-ci, correspond à une paroi intérieure de celle-ci, incorpore des éléments (27) d'acheminement de fibres destinés à des fibres optiques (13) du ou de chacun des premiers câbles (11) à fibres optiques et des éléments (27) d'acheminement de fibres destinés à des fibres optiques (14) des deuxièmes câbles (12) à fibres optiques.

8. Dispositif de distribution de fibres optiques selon l'une des revendications 1 à 7, **caractérisé en ce qu'**une paroi (24) de ladite partie souple (19) de boîtier qui, dans l'état fermé de celle-ci, correspond à une paroi intérieure de celle-ci, incorpore des éléments (28) de maintien destinés à des épissures et / ou à des connecteurs par lesquels des fibres optiques (13) du ou de chacun des premiers câbles (11) à fibres optiques et des fibres optiques (14) des deuxièmes câbles (12) à fibres optiques sont assemblées par épissure et / ou reliées l'une à l'autre.

9. Dispositif de distribution de fibres optiques selon l'une des revendications 1 à 8, **caractérisé en ce que** ledit boîtier (16) est constitué d'un matériau plastique souple comme un matériau thermoplastique souple.

10. Dispositif de distribution de fibres optiques selon la revendication 9, **caractérisé en ce que** ladite partie souple (19) de boîtier et ledit élément (22) de bouchon sont tous deux constitués dudit matériau plastique souple.

11. Ensemble comportant un dispositif (10) de distribution de fibres optiques selon l'une des revendications 1 à 10, au moins un premier câble (11) à fibres optiques et une pluralité de deuxièmes câbles (12) à fibres optiques.
